# EUROPÄISCHE PATENTANMELDUNG

(11) **EP 4 844 437 A1**
(43) Veröffentlichungstag der Anmeldung: **25.11.2026**
(21) Anmeldenummer: 26179767.4
(22) Anmeldetag: 20.05.2026
(51) Int. Cl.: G01S 7/40, G01S 13/86, G01S 13/87, G01S 13/937

(54) **SYSTEM ZUR POSITIONSBESTIMMUNG- UND/ODER ZUR BEWEGUNGSERKENNUNG UND/ODER DISTANZBESTIMMUNG VON SCHWIMMKÖRPERN**

(30) Priorität: 23.05.2025 DE 102025120223
(71) Anmelder: Hoppe Marine GmbH, 22525 Hamburg (DE)
(72) Erfinder: Reimer, Klas, 22523 Hamburg (DE); Groth, Ralf, 25361 Krempe (DE); Jaspersen, Lars, 24568 Nützen (DE)
(74) Vertreter: Müller Schupfner & Partner Patent- und Rechtsanwaltspartnerschaft mbB (Muc)

(57) **Zusammenfassung**

System 100, insbesondere zur Positionsbestimmung- und/oder zur Bewegungserkennung und/oder Distanzbestimmung von Schwimmkörpern 200, aufweisend einen Erfassungssensor 110, einen Korrektursensor 120, und eine Steuereinheit 130, wobei der Erfassungssensor 110 und/oder der Korrektursensor 120 an dem Schwimmkörper 200 anbringbar ist, wobei der Erfassungssensor 110 eingerichtet ist, eine Primärdistanz 420 des Erfassungssensor 110 zu einem Umgebungsobjekt 50, insbesondere in einer Umgebung des Schwimmkörpers 200, zu ermitteln, wobei der Korrektursensor 120 eingerichtet ist, eine Realneigung des Korrektursensors 120 zu ermitteln, wobei die Steuereinheit 130 mit dem Erfassungssensor 110 und/oder dem Korrektursensor 120 zum Signalaustausch, insbesondere kabellos, verbunden ist, und wobei die Steuereinheit 130 eingerichtet ist, eine Realdistanz 460 des Schwimmkörpers 200 zu dem Umgebungsobjekt 50 mittels der ermittelten Primärdistanz 420 des Erfassungssensors 110 zum Umgebungsobjekt 50 unter Berücksichtigung der ermittelten Realneigung des Korrektursensors 120 zu bestimmen.

## Beschreibung

Die Erfindung betrifft ein System zur Positionsbestimmung und/oder zur Bewegungserkennung und/oder Distanzbestimmung eines Schwimmkörpers, ein Schiff aufweisend ein solches System, ein Verfahren zur Positions- und Bewegungserkennung von Schwimmkörpern, ein Verfahren zur Herstellung eines Schiffs, die Verwendung des Systems und die Verwendung des Schiffs.

Schwimmkörper, insbesondere Schiffe, weisen häufig Systeme zur Entfernungsbestimmung von Objekten in ihrer Umgebung auf. Hierzu werden verschiedene Techniken angewendet. Die bekannten Systeme für die Entfernungsbestimmung von Objekten sind jedoch dazu eingerichtet, die Entfernung zu Objekten in größeren Entfernungen zu bestimmen. Bei diesen größeren Entfernungen spielt eine exakte Bestimmung der Distanz keine besonders große Rolle. Die exakte Bestimmung einer Distanz wird jedoch umso relevanter, je geringer der Abstand zwischen dem Schwimmkörper und dem Objekt in der Umgebung ist.

Es ist daher Aufgabe der vorliegenden Erfindung, ein System bereitzustellen, dass eine möglichst exakte bzw. zuverlässige Distanzbestimmung eines Schwimmkörpers zu einem Objekt in der Umgebung ermöglicht.

Diese Aufgabe wird mit einem System gemäß Anspruch 1, einem Schiff nach Anspruch 12, einem Verfahren nach Anspruch 13 und 14 und einer Verwendung nach Anspruch 15 gelöst. Weitere Merkmale, Vorteile und Ausführungsformen ergeben sich aus den abhängigen Ansprüchen, der Beschreibung sowie den Figuren.

Erfindungsgemäß ist ein System, insbesondere zur Positionsbestimmung und/oder zur Bewegungserkennung und/oder zur Distanzbestimmung eines Schwimmkörpers, bevorzugt in Relation zu einem Umgebungsobjekt. Insbesondere weist das System einen Erfassungssensor auf. Bevorzugt weist das System einen Korrektursensor auf. Insbesondere weist das System eine Steuereinheit auf. Bevorzugt ist der Erfassungssensor und/oder der Korrektursensor an dem Schwimmkörper anbringbar. Insbesondere ist der Erfassungssensor eingerichtet, eine Primärdistanz des Erfassungssensors zu einem Umgebungsobjekt, insbesondere in einer Umgebung des Schwimmkörpers, zu ermitteln. Insbesondere ist der Korrektursensor eingerichtet, eine Realneigung, insbesondere um zumindest eine Raumrichtung, des Korrektursensors zu ermitteln. Insbesondere ist die Steuereinheit mit dem Erfassungssensor und/oder dem Korrektursensor zum Signalaustausch, insbesondere kabellos und/oder kabelgebunden, verbunden oder verbindbar. Bevorzugt ist die Steuereinheit eingerichtet, eine Realdistanz des Schwimmkörpers zu dem Umgebungsobjekt mittels der ermittelten Primärdistanz des Erfassungssensors zum Umgebungsobjekt unter Berücksichtigung der ermittelten Realneigung des Korrektursensors und/oder des Schwimmkörpers zu bestimmen. Die Realneigung oder einige von deren Komponenten werden im Rahmen der Erfindung auch als Neigung bezeichnet. Die Realneigung oder die Neigung kann einen rotatorischen Winkel um eine oder verschiedene Raumrichtungen bezeichnen, z.B. einen Rollwinkel und/oder einen Stampfwinkel des Schwimmkörpers.

Ein Vorteil der Erfindung kann insbesondere darin liegen, dass in Folge der Berücksichtigung der Realneigung eine veränderte Stellung des Erfassungssensors bei der Ermittlung der Realdistanz berücksichtigt wird. Dies erhöht eine Genauigkeit der Bestimmung der Realdistanz. In der Konsequenz kann eine Position, eine Annäherungsgeschwindigkeit und eine Bewegungserkennung mit einer erhöhten Genauigkeit erfolgen, insbesondere wenn der Abstand zum Umgebungsobjekt gering ist. Ist zum Beispiel der Erfassungssensor an einer erhöhten Stelle des Schwimmkörpers angeordnet und kommt es z.B. zu einer Rollbewegung des Schwimmkörpers, so kann diese Bewegung des Schwimmkörpers die Distanzmessung beeinträchtigen bzw. verfälschen. Eine besonders große Beeinträchtigung der Messung liegt z.B. dann vor, wenn der Erfassungssensor auf einem Mast des Schwimmkörper angeordnet ist und dieser Mast aufgrund rotatorischer Bewegungen des Schwimmkörpers, insbesondere einer Rollbewegung, schwankt, wobei jedoch die Position des Schwimmkörpers im Wasser selbst unverändert bleibt. Durch die Berücksichtigung der Realneigung bei der Bestimmung der Realdistanz wird eine solche Schwankung der Position des Erfassungssensors berücksichtigt und möglichst kompensiert. In anderen Worten basiert die Realdistanz auf der durch den Erfassungssensor ermittelten Primärdistanz, die jedoch durch die vom Korrektursensor erfassten rotatorischen Bewegungen / Schwankungsbewegung des Schwimmkörpers korrigiert wird. Hierdurch kann insbesondere eine besonders präzise relative Positions- bzw. Distanzbestimmung erreicht werden. Für diese Korrektur, die in der Steuereinheit vorgenommen wird, sind sowohl der Erfassungssensor als auch der Korrektursensor mit der Steuereinheit informationstechnisch verbunden oder verbindbar. In anderen Worten ist die Steuereinheit eingerichtet, die Realdistanz des Schwimmkörpers zu dem Umgebungsobjekt mittels der ermittelten Primärdistanz des Erfassungssensors zum Umgebungsobjekt unter Berücksichtigung der ermittelten Realneigung des Korrektursensors zu bestimmten.

Insbesondere handelt es sich bei der Realdistanz um die kürzeste Distanz zwischen dem Schwimmkörper bzw. dem Erfassungssensor zu dem Umgebungsobjekt. Hierdurch kann eine besonders für Kollisionen sichere Einschätzung der Distanz erfolgen. Dieser Umstand wird besonders dann relevant, wenn z.B. das Umgebungsobjekt keine gerade Oberfläche aufweist.

Insbesondere kann es sich bei dem Schwimmkörper um ein Schiff oder um ein Dock, bevorzugt ein Floating Dock / Schwimmdock, und/oder um eine Barge handeln. Insbesondere kann es sich bei dem Umgebungsobjekt um ein weiteres Schiff und/oder um ein Floating Dock und/oder um eine Barge und/oder um einen Pier und/oder um ein anderweitiges Dock und/oder einen Bestandteil einer Hafeninfrastruktur handeln.

Bevorzugt kann der Korrektursensor auch als Neigungssensor bezeichnet werden bzw. einen Neigungssensor umfassen oder als ein solcher ausgebildet sein.

Insbesondere weist der Schwimmkörper eine Längsachse, eine Querachse und eine Hochachse auf. Die Längsachse ist parallel zu einer Haupterstreckungsrichtung des Schwimmkörpers orientiert. Die Querachse ist orthogonal zur Längsachse ausgerichtet und wobei die Längsachse und die Querachse eine Ebene parallel zur, insbesondere idealen, Wasserlinie bilden. Die Hochachse ist orthogonal zu Längsachse und zur Querachse ausgerichtet. Die Längsrichtung kann auch als Längsachse bezeichnet werden und/oder die Querachse kann auch als Querrichtung bezeichnet werden.

Bevorzugt handelt es sich bei der Realneigung um eine Neigung relativ zu dem Erdschwerefeld. In anderen Worten kann die Realneigung die Neigung um eine Achse, bevorzugt die Längsachse, eines mit dem Schwimmkörper mitbewegten Koordinatensystems zu einem erdfesten Koordinatensystem sein oder diese umfassen.

Beispielsweise handelt es sich bei den Umgebungsobjekten um einen weiteren Schwimmkörper, insbesondere ein Schiff, und/oder um ein örtlich feststehendes Objekt. Insbesondere kann das örtlich feststehende Objekt eine Hafeninfrastruktur, insbesondere ein Kai, sein.

Bevorzugt weist das System mehrere, insbesondere zwei, Erfassungssensoren auf. Insbesondere sind mehrere, insbesondere alle, Erfassungssensoren an dem Schwimmkörper anbringbar oder angebracht. Bevorzugt sind mehrere, insbesondere alle, Erfassungssensoren eingerichtet, eine Primärdistanz zu einem oder mehreren Umgebungsobjekten zu ermitteln.

Die Steuereinheit ist zum Signalaustausch mit mehreren, insbesondere allen, Erfassungssensoren, insbesondere kabellos und/oder kabelgebunden, verbunden oder verbindbar. Die Steuereinheit wiederum kann eingerichtet sein, die Realdistanz des Schwimmkörpers zu dem oder den Umgebungsobjekt(en) mittels der ermittelten Primärdistanzen der Erfassungssensoren, insbesondere aller Erfassungssensoren, zum Umgebungsobjekt unter Berücksichtigung der ermittelten Realneigung der Korrektursensoren zu bestimmten. Insbesondere kann es sich hierbei um mehrere unterschiedliche Umgebungsobjekte handeln.

Besonders bevorzugt weist das System mehrere, insbesondere zwei, Korrektursensoren auf. Mehrere, insbesondere alle, Korrektursensoren sind an dem Schwimmkörper anbringbar oder angebracht. Mehrere, insbesondere alle, Korrektursensoren können eingerichtet sein, eine Realneigung der, insbesondere jeweiligen, Korrektursensoren zu ermitteln. Bevorzugt kann es sein, wenn die Anzahl der Korrektursensoren der Anzahl der Erfassungssensoren entspricht. Hierdurch kann eine besonders einfache Korrektur für jeden der Erfassungssensoren erfolgen. Die Steuereinheit ist zum Signalaustausch mit mehreren, insbesondere allen, Korrektursensoren, insbesondere kabellos und/oder kabelgebunden, verbunden oder verbindbar. Die Steuereinheit ist bevorzugt eingerichtet, die Realdistanz des Schwimmkörpers zu dem Umgebungsobjekt mittels der ermittelten Primärdistanz des Erfassungssensors oder der Erfassungssensoren zum Umgebungsobjekt unter Berücksichtigung aller ermittelten Realneigung(en) aller Korrektursensoren zu bestimmten. Ein Vorteil dieser Ausführungsform kann sein, dass eine Realdistanz, bzw. mehrere Realdistanzen präziser ermittelt werden kann bzw. können. Dies ist insbesondere der Fall, wenn der Schwimmkörper, insbesondere entlang seiner Längsachse, eine zumindest nicht unerhebliche Torsion erfährt und folglich unterschiedliche Abschnitte des Aufbaus des Schwimmkörpers sich in unterschiedlichem Maße relativ zu dem Schwerpunkt des Schwimmkörpers neigen. Ferner ist dies insbesondere der Fall, wenn sich der Schwimmkörper in einem geringen Abstand zu einem Umgebungsobjekt befindet. Hierbei führt eine geringe Änderung der Neigung des Schwimmkörpers zu einer enormen relativen Veränderung des Primärabstandes zwischen dem Erfassungssensor und dem Umgebungsobjekt.

Bevorzugt weist das System die gleiche Anzahl an Erfassungssensoren und an Korrektursensoren auf. Insbesondere ist jedem Erfassungssensor ein Korrektursensor zugeordnet. Insbesondere ist die Steuereinheit eingerichtet, bei der Ermittlung der Realdistanz ausgehend von den Primärdistanzen für jede Primärdistanz eine zugehörige Realneigung des jeweilig zugeordneten Korrektursensors zu berücksichtigen. Ein Vorteil dieser Ausführungsform kann sein, dass für jede erfasste Primärdistanz eine zugehörige Realneigung erfasst wird und diese zugehörige Realneigung bei der Ermittlung der Realdistanz berücksichtigt wird. Hierdurch wird eine höhere Genauigkeit der Realdistanz erreicht.

Vorteilhafterweise ist die Steuereinheit eingerichtet, jede der ermittelten Primärdistanzen durch zumindest eine ermittelte Realneigung zu kompensieren bzw. zu korrigieren. Ein Vorteil dieser Ausführungsform kann sein, dass eine Genauigkeit der bestimmten Realdistanz verbessert wird.

Besonders vorteilhaft ist der Korrektursensor eingerichtet, insbesondere mehrere, bevorzugt alle, Korrektursensoren sind eingerichtet, zumindest die Realneigung um die Längsachse bzw. die Rollachse des Schwimmkörpers zu bestimmen. Alternativ oder zusätzlich bevorzugt können die oder der Korrektursensor(en) eingerichtet sein, die Realneigung um die Querachse bzw. den Trimm oder die Stampfbewegung des Schwimmkörpers zu bestimmen. In anderen Worten kann bei der Korrektur der Primärdistanz die Neigung um die Längsachse und/oder um die Querachse berücksichtigt sein, um so die Realdistanz zu ermitteln.

Bevorzugt ist der Erfassungssensor, insbesondere sind mehrere, bevorzugt alle, Erfassungssensoren, als Radar, insbesondere als frequenzmoduliertes Radar und/oder als Dauerstrichradar, ausgestaltet. Insbesondere ist der Erfassungssensor als ein FMCW-Radar ausgestaltet. Ein Vorteil dieser Ausführungsform kann sein, dass eine präzise und zuverlässige Ermittlung der Primärdistanz erfolgt. Dies gilt gerade auch für einen sehr kleinen bzw. geringen Messbereich. In anderen Worten ermöglicht gerade ein frequenzmoduliertes Radar bzw. ein FMCW-Radar, dass eine zuverlässige Distanzermittlung in einem Bereich von 10 cm bis 80 m erfolgen kann. Durch den Einsatz eines FMCW-Radars bzw. eines frequenzmodulierten Radars kann daher gerade auch bei kritischen Manövern bzw. beim Anlegen mit nahekommenden Umgebungsobjekten sicher und zuverlässig eine Positions- bzw. Distanzbestimmung erfolgen.

Besonders bevorzugt ist der Erfassungssensor eingerichtet, insbesondere sind mehrere, bevorzugt alle, Erfassungssensoren eingerichtet, eine Distanz in einem Erfassungsbereich von 5 cm, insbesondere von 10 cm, bis 80 m, bevorzugt bis 50 m zu ermitteln. In anderen Worten liegt der Messbereich des oder der Erfassungssensoren bevorzugt in einem Bereich von 10 cm bis 80 m. Besonders bevorzugt in einem Bereich von 10 cm bis 50 m. Ein Vorteil dieser Ausführungsformen kann sein, dass mittels der präzisen Ermittlung der Primärdistanz eine präzise Bestimmung der Position und/oder der Realdistanz ermöglicht wird. Dies vereinfacht eine Annäherungsvorgang zwischen dem Schwimmkörper und einem Umgebungsobjekt. Insbesondere kann dies bei einem Anlegemanöver des Schwimmkörpers an einer Hafeninfrastruktur oder an einen andere Schwimmkörper von Vorteil sein.

Vorteilhafterweise ist der Korrektursensor eingerichtet, insbesondere sind mehrere, bevorzugt alle, Korrektursensoren eingerichtet, die Realneigung mittels einer Winkelmessung relativ zu einem Lot zu ermitteln. Das Lot ist insbesondere entlang des Erdschwerefelds ausgerichtet. Die Neigung des Korrektursensors entspricht dem Winkel zwischen der aktuellen Lage des Schwimmkörpers bzw. des Erfassungs- oder Korrektursensors zu dem Lot. Hierdurch kann die Genauigkeit der Realdistanzbestimmung weiter gesteigert werden.

Besonders vorteilhaft basiert die Messung des oder einiger oder aller Korrektursensoren auf einem mechanischen Prinzip und/oder einem elektrischen Prinzip, und/oder einem magnetischen Prinzip. Bevorzugt weist der Erfassungssensor ein Gyroskop auf. Bevorzugt ist das Lot als Gyroskop ausgestaltet. Ein Vorteil dieser Ausführungsform kann sein, dass mittels eines Gyroskops eine Realneigung in drei unterschiedlichen Achsen ermittelt werden kann. Dies verbessert die Genauigkeit der Bestimmung der Realdistanz.

Besonders bevorzugt ist der Korrektursensor, insbesondere sind mehrere, bevorzugt alle, Korrektursensoren, als inertiale Messeinheit(en) ausgestaltet. Ein Vorteil dieser Ausführungsform ist die besonders zuverlässige Erfassung der Realneigung. Auch kann die inertiale Messeinheit für weitere Funktionen, wie die Erfassung der Bewegung des Schwimmkörper entlang der drei Achsen, verwendet werden. Dies führt zu einem besonders kostengünstigen und vielfältig einsetzbaren System.

Besonders bevorzugt ist der Erfassungssensor eingerichtet, insbesondere sind mehrere, bevorzugt alle, Erfassungssensoren, in einem Frequenzband von 76 bis 81 GHz, insbesondere in einem Frequenzband von 77 bis 81 GHz, zu arbeiten. Hierbei bezieht sich die Frequenz in dem Frequenzband auf die Frequenz, mit welcher der Erfassungssensor ein Signal zur Erfassung der Umgebung aussendet. Diese Frequenzbänder haben sich insbesondere dahingehend als bevorzugt erweisen, da bei diesen eine besonders gute und zuverlässige Distanzbestimmung möglich ist.

Vorteilhafterweise ist die Steuereinheit eingerichtet, die Realdistanz zwischen dem Schwimmkörper und dem Umgebungsobjekt mittels einer Vektorzerlegung der ermittelten Primärdistanz des Erfassungssensors zum Umgebungsobjekt und der ermittelten Realneigung des Korrektursensors zu bestimmen. Ein Vorteil dieser Ausführungsform ist, dass eine Vektorrechnung einen geringen Rechenaufwand benötigt und daher auf einer einfachen Steuereinheit zuverlässig und schnell ausgeführt werden kann. Die Vektorzerlegung erfolgt insbesondere in ein / in einem globalen Koordinatensystem, dass den Rotationsbewegungen des Schwimmkörpers nicht folgt. Ggf. kann jedoch dieses globale Koordinatensystem den translatorischen Bewegungen des Schwimmkörpers folgen.

Bevorzugt ist der Erfassungssensor und/oder ist der Korrektursensor eingerichtet, einen Trimmwinkel des Schwimmkörpers zu ermitteln. Die Steuereinheit ist eingerichtet, bei der Bestimmung der Distanz des Schwimmkörpers zu dem Umgebungsobjekt den Trimmwinkel des Schwimmkörpers zu berücksichtigen. Insbesondere wird sowohl der statische Trimmwinkel als auch die Stampfbewegung ermittelt. Ein Vorteil dieser Ausführungsform kann sein, dass der Trimmwinkel einen Einfluss auf die Position des Erfassungssensors hat und eine Berücksichtigung des Trimmwinkels bei der Bestimmung der Realdistanz basierend auf der ermittelten Primärdistanz einen positiven Einfluss auf die Genauigkeit der bestimmten Realdistanz hat.

Besonders bevorzugt sind der Erfassungssensor und der Korrektursensor in einer Einheit und/oder in einem Gehäuse angeordnet. Ein Vorteil dieser Ausführungsform kann sein, dass der Korrektursensor mit einer höheren Genauigkeit die Neigung am Ort des Erfassungssensor ermitteln kann. Dies erhöht die Genauigkeit bei der Bestimmung der Realdistanz. Auch kann hierdurch eine Vereinfachung der Montage erfolgen.

Vorteilhafterweise ist der Erfassungssensor, insbesondere sind mehrere, bevorzugt alle, Erfassungssensoren, fest an einer Struktur des Schwimmkörpers befestigbar oder befestigt. Alternativ oder zusätzlich bevorzugt ist der Korrektursensor, insbesondere sind mehrere, bevorzugt alle, Korrektursensoren, fest an einer Struktur des Schwimmkörpers befestigbar oder befestigt. Insbesondere sind die Erfassungssensoren und/oder die Korrektursensoren stoffschlüssig und/oder formschlüssig, und/oder kraftschlüssig an dem Schwimmkörper befestigbar und/oder befestigt. Insbesondere sind die Erfassungssensoren und/oder die Korrektursensoren mittels Schraubverbindungen und/oder mittels Schweißens an dem Schwimmkörper befestigbar und/oder befestigt. Diese Ausgestaltungsform führt insbesondere dazu, dass bei einer Bewegung des Schwimmkörpers sich der Erfassungssensor und/oder der Korrektursensor mit dem Schwimmkörper, insbesondere gleichförmig, sicher mitbewegen.

Vorteilhafterweise ist der Erfassungssensor, insbesondere sind mehrere, bevorzugt alle, Erfassungssensoren, an unterschiedlichen Positionen an dem Schwimmkörper anbringbar. Alternativ und/oder zusätzlich ist der Korrektursensor, insbesondere sind mehrere, bevorzugt alle, Korrektursensoren, an unterschiedlichen Positionen an dem Schwimmkörper anbringbar. Ein Vorteil dieser Ausführungsform könnte sein, dass eine Torsion oder anderweitige Verwindungen und Drehungen des Schwimmkörpers bei der Bestimmung der Realdistanz berücksichtigt werden.

Bevorzugt ist der Erfassungssensor, bevorzugt zumindest ein Erfassungssensor, insbesondere sind mehrere Erfassungssensoren, weniger als 27 %, und/oder bevorzugt weniger als 15 %, einer Schwimmkörperlänge des Schwimmkörpers von einem Bug des Schwimmkörper und/oder von einem Heck des Schwimmkörpers entfernt anordenbar oder angeordnet. Grundlegend kann die als Schwimmkörperlänge bezeichnete Länge die Gesamtlänge des Schwimmkörpers sein. Insbesondere kann die Schwimmkörperlänge die Länge des Schwimmkörpers in der Schwimmwasserlinie sein. Insbesondere kann die Schwimmkörperlänge die Länge des Schwimmkörpers zwischen den Loten, welche auch als Lpp bezeichnet wird, sein. Insbesondere kann die Schwimmkörperlänge die Länge des Schwimmkörpers über Alles, welche auch als LüA bezeichnet wird, sein. Insbesondere kann die Schwimmkörperlänge die Länge an Deck des Schwimmkörpers, welche auch als LaD bezeichnet wird, sein. Bei einer Distanz von weniger als 27 % kann eine besonders gute Distanzbestimmung gerade auch im Schulterbereich des Schwimmkörpers erfolgen. Bei einer Distanz von weniger als 15 % kann eine besonders sichere Erfassung im Bereich des Bugs und/oder des Hecks erfolgen.

Besonders bevorzugt sind mehrere Erfassungssensoren so anordenbar oder so angeordnet, dass sich die Messbereiche von zumindest zwei, bevorzugt von zumindest vier, besonders bevorzugt aller, der mehreren Erfassungssensoren mit dem Messbereich eines anderen Erfassungssensors überschneiden. Ein Vorteil dieser Ausführungsform ist insbesondere, dass hierdurch eine besonders gute Entfernungsüberwachung erreicht werden kann.

Vorteilhafterweise sendet der oder die Erfassungssensor(en) zur Erfassung der Umgebung Erfassungsstrahlen aus. Hierbei decken die Erfassungsstrahlen bevorzugt zumindest den Messbereich ab.

Eine Verbindungslinie zwischen dem Zentrum des Erfassungssensors und dem Zentrum, insbesondere dem Flächenzentrum, des Messbereichs kann insbesondere als Haupterfassungsrichtung des oder der Erfassungssensoren bezeichnet werden. Insbesondere weist der Messbereich einen geschlossenen Umfang in einer Schnittebene senkrecht zur Haupterfassungsrichtung auf, welcher als Messbereichskontur bezeichnet wird. Die Haupterfassungsrichtung ist insbesondere alternativ oder zusätzlich bevorzugt diejenige Richtung, in welche der Erfassungssensor nominal ausgerichtet ist. In anderen Worten ist die Haupterfassungsrichtung insbesondere diejenige Richtung, um die herum der Messbereich ausgebildet ist.

Der Messbereich des oder der Erfassungssensor(en) kann insbesondere eine Messkeule sein oder ausbilden.

Bevorzugt oder zusätzlich weist der Messbereich einen Hauptstreuwinkel auf. Der Hauptstreuwinkel ist dabei die Hälfte des maximalen Öffnungswinkels des Messbereichs. Der Hauptstreuwinkel kann daher insbesondere der maximal mögliche Winkel zwischen der Haupterfassungsrichtung und der äußeren Kontur des Messbereichs sein. Bevorzugt ist der Hauptstreuwinkel des Messbereichs in einem Bereich von 40° bis 85°, besonders bevorzugt in einem Bereich von 60° bis 80°.

Insbesondere weist der Messbereich des oder der Erfassungssensor(en) einen Sekundärstreuwinkel auf, wobei der Sekundärstreuwinkel in einem Bereich von 10° bis 30°, bevorzugt in einem Bereich von 14° bis 27°, liegen kann. Der Sekundärstreuwinkel ist die Hälfte des minimalen Öffnungswinkels des Messbereichs. Der Sekundärstreuwinkel kann daher insbesondere der kleinste mögliche Winkel zwischen der Haupterfassungsrichtung und der äußeren Kontur des Messbereichs sein.

Vorteilhafterweise ist der Erfassungssensor oder einige oder alle Erfassungssensoren derart ausgebildet und/oder ist derart am Schwimmkörper festlegbar oder festgelegt, dass die Haupterfassungsrichtung des Erfassungssensors relativ zur Querrichtung des Schwimmkörpers um die Längsachse des Schwimmkörpers um bis zu 35°, insbesondere um bis zu 25°, insbesondere um bis zu 12°, geneigt ist, und/oder insbesondere nach unten geneigt ist. Ein Vorteil dieser Ausführungsform kann sein, dass Objekte mit einer geringen Höhe, wie etwa Lotsenschiffe oder eine Hafeninfrastruktur, auch bei geringen Distanzen sicher erfasst werden können. Dies verbessert eine Ermittlung der Primärdistanz für niedrige oder nahe Objekte und erleichtert Annäherungsmanöver zwischen dem Schwimmkörper und dem Umgebungsobjekt gerade bei kurzen Distanzen. Darüber hinaus kann durch diese Neigung des Erfassungssensors auch der Messbereich des Erfassungssensors besser ausgenutzt werden.

Bevorzugt ist die Steuereinheit und/oder der Erfassungssensor eingerichtet, eine Annäherungsgeschwindigkeit zwischen dem Schwimmkörper und einem Umgebungsobjekt, bevorzugt mittels der ermittelten Realdistanz des Erfassungssensors, zu bestimmen. Dies kann unter Ausnutzung des Dopplereffekts und/oder unter Nutzung einer zeitlichen Ableitung der Realdistanz erfolgen. Besonders bevorzugt ist die Steuereinheit eingerichtet, eine Annäherungsgeschwindigkeit zwischen dem Schwimmkörper und einem Umgebungsobjekt zu bestimmen. Insbesondere ist die Steuereinheit eingerichtet, eine Annäherungsgeschwindigkeit zwischen dem Schwimmkörper und einem Umgebungsobjekt basierend auf zeitlich aufeinanderfolgenden ermittelten Realdistanzen des Erfassungssensors, insbesondere der mehreren Erfassungssensoren, zu bestimmen. Insbesondere ist die Steuereinheit eingerichtet eine Änderung der Annäherungsgeschwindigkeit zwischen dem Schwimmkörper und einem Umgebungsobjekt zu bestimmen. Ein Vorteil dieser Ausführungsform kann sein, dass durch die zusätzliche Information über die Annäherungsgeschwindigkeit ein Annäherungsvorgang zwischen dem Schwimmkörper und dem Umgebungsobjekt besser eingeschätzt und beherrscht werden kann.

Vorteilhafterweise ist die Steuereinheit eingerichtet, zu erkennen, ob eine Abschaltbedingung erfüllt ist, und einen oder mehrere der, insbesondere alle, Korrektursensor(en) und/oder einen oder mehrere der, insbesondere alle, Erfassungssensor(en) abzuschalten, wenn die Abschaltbedingung erfüllt ist. Ein Vorteil dieser Ausführungsform kann sein, dass durch das Abschalten des Erfassungssensors und/oder des Korrektursensors die Störungsstrahlung im Bereich der Umgebung des Schwimmkörpers abnimmt. Dies reduziert insbesondere Messfehler. Ferner kann ein Vorteil dieser Ausführungsform sein, dass ein Energieverbrauch des Systems sich verringert.

Besonders vorteilhaft liegen für den Korrektursensor, insbesondere für mehrere, bevorzugt für alle, Korrektursensoren und/oder für den Erfassungssensor, insbesondere für mehrere, bevorzugt für alle, Erfassungssensoren, unterschiedliche Abschaltbedingungen vor. Ein Vorteil dieser Ausführungsform kann sein, dass nur diejenigen Erfassungssensoren und/oder Korrektursensoren abgeschaltet werden, welche aktuell nicht benötigt werden. Dies erlaubt eine häufigere Abschaltung der einzelnen Erfassungssensoren und/oder Korrektursensoren als wenn für alle Sensoren die gleichen Abschaltbedingungen gelten würden.

Bevorzugt sind die Abschaltbedingungen erfüllt, wenn von dem Erfassungssensor, insbesondere an Interferenzen, ein vordefinierter unterer erfasster Grenzwert für eine vordefinierte Zeit unterschritten ist. Ein Vorteil dieser Ausführungsform kann sein, dass die jeweiligen Erfassungssensoren und/oder Korrektursensoren abgeschaltet werden, wenn kein Umgebungsobjekt vorhanden ist.

Besonders bevorzugt ist die Steuereinheit eingerichtet, einen oder mehrere der Korrektursensor(en) und/oder einen oder mehrere der Erfassungssensor(en) anzuschalten, wenn eine Anschaltbedingung erfüllt ist. Ein Vorteil dieser Ausführungsform kann sein, dass die Erfassungssensoren und/oder die Korrektursensoren wieder angeschaltet werden können, sofern ein Umgebungsobjekt in einem Erfassungsbereich vorliegt.

Vorteilhafterweise gelten für den Korrektursensor, insbesondere für mehrere, bevorzugt für alle, Korrektursensoren und für den Erfassungssensor, insbesondere für mehrere, bevorzugt für alle, Erfassungssensoren unterschiedliche Anschaltbedingungen. Ein Vorteil dieser Ausführungsform kann sein, dass nur diejenigen Erfassungssensoren und/oder Korrektursensoren angeschaltet werden, welche aktuell benötigt werden. Dies erlaubt eine häufigere Anschaltung der einzelnen Erfassungssensoren und/oder Korrektursensoren, als wenn für alle Sensoren die gleichen Anschaltbedingungen gelten würden.

Bevorzugt ist die Anschaltbedingung und/oder Abschaltbedingung erfüllt, wenn diese händisch von einem Nutzer angegeben wird. Ein Vorteil dieser Ausführungsform kann sein, dass der Nutzer das System, etwa bei Fehleinschätzungen, übersteuern kann. Dies steigert eine Sicherheit des Systems.

Besonders bevorzugt weist das System eine grafische Darstellungseinheit auf. Insbesondere ist die Darstellungseinheit eingerichtet, Informationen an den Nutzer auszugeben. Bevorzugt ist die Darstellungseinheit eingerichtet, Informationen an den Nutzer, insbesondere haptisch und/oder visuell und/oder akustisch, auszugeben. Bevorzugt ist die Darstellungseinheit eingerichtet, eine Eingabe des Nutzers anzunehmen und bereitzustellen und/oder auszugeben. Ein Vorteil dieser Ausführungsform kann sein, dass eine Interaktion zwischen dem System und dem Nutzer auf einfache und zuverlässige Weise erfolgen kann. Die Darstellungseinheit kann informationstechnisch mit der Steuereinheit, insbesondere kabellos, verbunden sein. Die Darstellungseinheit kann integral mit der Steuereinheit ausgebildet sein und/oder die Darstellungseinheit und die Steuereinheit können in einem gemeinsamen Gehäuse angeordnet sein.

Bevorzugt ist die Steuereinheit eingerichtet, die bestimmte Realdistanz zwischen dem Schwimmkörper und dem Umgebungsobjekt mit einem Referenzgrenzwert zu vergleichen und bei einem Unterschreiten des Referenzgrenzwertes einen Warnhinweis, insbesondere an die Darstellungseinheit, bereitzustellen und/oder auszugeben. Ein Vorteil dieser Ausführungsform kann sein, dass eine mögliche Kollision oder anderweitige ungewünschte Situationen zwischen dem Schwimmkörper und dem Umgebungsobjekt rechtzeitig von einem Nutzer erkannt und vermieden werden können.

Bevorzugt ist die Steuereinheit eingerichtet, die Realdistanz und/oder die Annäherungsgeschwindigkeit und/oder die zeitliche Änderung der Annäherungsgeschwindigkeit an die Darstellungseinheit zu übermitteln und/oder für die Darstellungseinheit zur Verfügung zu stellen. Insbesondere kann die Darstellungseinheit eingerichtet sein, die Realdistanz und/oder die Annäherungsgeschwindigkeit und/oder die zeitliche Änderung der Annäherungsgeschwindigkeit darzustellen. Insbesondere ist die Darstellungseinheit eingerichtet, die Annäherungsgeschwindigkeit die zeitliche Änderung der Annäherungsgeschwindigkeit als einen Pfeil darzustellen. Ein Vorteil dieser Ausführungsform kann sein, dass mehrere Informationen über die aktuelle Situation des Schwimmkörpers gleichzeitig für den Nutzer darstellt werden können und somit insbesondere der zur Verfügung stehende Darstellungsraum effizient genutzt werden kann.

Bevorzugt umfasst das System einen bzw. den Schwimmkörper, wobei der Schwimmkörper ein Schiff, und/oder ein Dock, bevorzugt ein Floating Dock / Schwimmdock, und/oder eine Barge sein kann.

Ferner betrifft die Erfindung ein Schiff und/oder ein Dock, bevorzugt ein Floating Dock / Schwimmdock, und/oder eine Barge. Insbesondere weist das Schiff und/oder das Dock, bevorzugt Floating Dock / Schwimmdock, und/oder die Barge ein System nach einer der vorhergehenden oder nachfolgenden Ausführungsformen auf. Somit weist das Schiff und/oder das Dock, bevorzugt das Floating Dock / Schwimmdock, und/oder die Barge zumindest die Vorteile der jeweiligen Ausführungsform des Systems auf. Ferner kann ein Vorteil dieser Ausführungsform sein, dass ein Schiff mit einem solchen System es dem Nutzer vereinfacht, das Schiff in der Umgebung einer Hafeninfrastruktur oder eines anderen Schiffs zu manövrieren.

Im Nachfolgenden wir zur Vereinfachung lediglich von einem Schiff gesprochen. Alternativ und/oder zusätzlich bevorzugt können die dargelegten Merkmale, Eigenschaften und/oder Vorteile im Rahmen der Erfindung jedoch auch ein Dock, bevorzugt ein Floating Dock / Schwimmdock, und/oder eine Barge betreffen und/oder aufweisen.

Vorteilhafterweise hat das Schiff eine Länge von mindestens 60 m. Gerade ab dieser Größe ist es vorteilhaft, ein erfindungsgemäßes System einzusetzen, denn ab dieser Größe ist eine visuelle Einschätzung einer Distanz des Schiffs zu einem Umgebungsobjekt nichtmehr einfach möglich oder nur unter hohem Personaleinsatz.

Bevorzugt ist ein Erfassungssensor und/oder ein Korrektursensor und/oder die Steuereinheit des Systems in oder an dem Schiff angeordnet.

Bevorzugt weist das Schiff eine Längsachse, eine Querachse und eine Hochachse auf. Die Längsachse ist parallel zu einer Haupterstreckungsrichtung des Schiffs. Die Querachse ist orthogonal zur Längsachse ausgerichtet. Die Längsachse und die Querachse bilden eine Ebene, insbesondere zumindest im Wesentlichen, parallel zur Wasserlinie und/oder zum Kiel des Schiffs. Die Hochachse ist orthogonal zu Längsachse und zur Querachse ausgerichtet.

Vorteilhafterweise ist der Korrektursensor des Systems eingerichtet, insbesondere sind mehrere, bevorzugt alle, Korrektursensoren des Systems eingerichtet, eine Neigung relativ zu der Längsachse des Schiffs, und/oder eine Neigung relativ zu der Querachse des Schiffs und/oder eine Neigung relativ zu der Hochachse des Schiffs zu ermitteln.

Bevorzugt ist die Steuereinheit eingerichtet, mittels der ermittelten Realneigung durch den oder die Korrektursensor(en) einen Rollwinkel und/oder einen Trimmwinkel des Schiffs zu ermitteln.

Besonders bevorzugt ist der Erfassungssensor, insbesondere sind mehrere, bevorzugt alle, Erfassungssensoren fest an einer Struktur des Schiffs befestigt. Alternativ oder zusätzlich ist der Korrektursensor, insbesondere sind mehrere, bevorzugt alle, Korrektursensoren, fest an einer Struktur des Schiffs befestigt. Ein Vorteil dieser Ausführungsform kann sein, dass bei einer Bewegung des Schiffs sich der Erfassungssensor und/oder der Korrektursensor mit dem Schiff, insbesondere gleichförmig, mitbewegt.

Vorteilhafterweise sind mehrere, insbesondere alle Erfassungssensoren, an unterschiedlichen Positionen am Schiff angeordnet. Ein Vorteil dieser Ausführungsform kann sein, dass eine Torsion oder anderweitige Verwindung und Drehungen des Schiffs bei der Bestimmung der Realdistanz berücksichtigt werden.

Besonders vorteilhaft weist das Schiff und/oder Dock, bevorzugt Floating Dock / Schwimmdock, und/oder die Barge eine erste Seite und eine der ersten Seite gegenüberliegende zweite Seite auf. An der ersten Seite und/oder an der zweiten Seite sind mehrere, insbesondere zwei, Erfassungssensoren angeordnet. Ein Vorteil dieser Ausführungsform könnte sein, dass eine bessere Abdeckung der Umgebung des Schiffes erreicht wird. Die erste und die zweite Seite des Schiffs und/oder des Docks, bevorzugt des Floating Docks / Schwimmdocks, und/oder der Barge sind insbesondere die Steuerboard bzw. die Backbordseite .

Gerade bei einem Dock können die oder einige der Erfassungssensoren nach innen weisend angeordnet sein. Daher können in dieser Situation die Erfassungssensoren ein Umgebungsobjekt innerhalb des Docks, insbesondere ein Schiff, besonders gut erfassen. Das Dock kann dabei besonders bevorzugt ein Floating Dock / Schwimmdock sein.

Besonders vorteilhaft ist der Erfassungssensor so an dem Schiff befestigt, dass wenn sich das Schiff im Wasser befindet, der Erfassungssensor sich mehr als zwei Meter über der Wasserlinie des Schiffes befindet. Insbesondere befindet sich der Erfassungssensor bei einem beladenen, insbesondere maximal oder minimal (leeres Schiff) zulässig beladenen, Schiff mehr als zwei Meter über der Wasserlinie. Ein Vorteil dieser Ausführungsform könnte sein, dass niedrigere Umgebungsobjekte, insbesondere Lotsenschiffe und die Hafeninfrastruktur, eindeutig im Erfassungsbereich des Erfassungssensors liegen und somit eine zuverlässige Primärdistanz zu solchen niedrigeren Objekten ermittelt werden kann.

Besonders vorteilhaft ist der Erfassungssensor so an dem Schiff befestigt, dass wenn sich das Schiff im Wasser befindet, der Erfassungssensor sich zumindest 2 m, bevorzugt zumindest 3 m, und/oder bevorzugt maximal 12 m, besonders bevorzugt maximal 10 m, über der Wasserlinie des Schiffes befindet. Insbesondere befindet sich der Erfassungssensor bei einem beladenen, insbesondere maximal oder minimal (leeres Schiff) zulässig beladenen, Schiff in einem Bereich von 2 m bis 12m über der Wasserlinie. Die obig genannten Höhenangaben können sich auf einen der Erfassungssensoren, den überwiegenden Teil der Erfassungssensoren oder auf alle Erfassungssensoren beziehen. Ein Vorteil dieser Ausführungsform ist insbesondere, dass niedrigere Umgebungsobjekte, insbesondere Lotsenschiffe und die Hafeninfrastruktur, eindeutig im Erfassungsbereich des Erfassungssensors liegen und somit eine zuverlässige Primärdistanz zu solchen niedrigeren Objekten ermittelt werden kann. Durch die angegebene Beschränkung in Hinblick auf den maximalen Abstand kann insbesondere erreicht werden, dass die Korrektur der Primärdistanz gering ausfällt und so die Genauigkeit gesteigert werden kann.

Besonders bevorzugt ist der Korrektursensor in einem Bereich von 1/3 bis 2/3 der Schiffslänge entlang der Längsachse des Schiffes angeordnet. Ein Vorteil dieser Ausführungsform kann sein, dass sich der Korrektursensor in der Nähe des Schwerpunktes des Schiffes befindet. Dies erlaubt eine zuverlässigere Bestimmung der Realdistanz.

Vorteilhafterweise sind die mehreren Erfassungssensoren so am Schiff angeordnet, dass sich die Messbereiche von zumindest zwei, bevorzugt von zumindest vier, der mehreren Erfassungssensoren überlappen, insbesondere mit jeweils zumindest einem anderen der Erfassungssensoren. Ein Vorteil dieser Ausführungsform kann sein, dass eine lückenlosere Erfassungsabdeckung erfolgen kann.

Bevorzugt weist zumindest ein Erfassungssensor eine Haupterfassungsrichtung auf, die in einer Ebene, die durch die Querachse und die Längsachse aufgespannt ist, einen Winkel im Bereich von 80° bis 90°, bevorzugt in einem Bereich von 85° bis 90°, mit der Längsachse bildet. Hierdurch kann gerade im seitlichen Bereich des Schiffs eine besonders gute Erfassung von Umgebungsobjekten bzw. eine Ermittlung der Distanz zu diesen Umgebungsobjekten erreicht werden.

Ansonsten können auch weitere Vorteile und Merkmale, die in Hinblick auf das System beschrieben sind, in gleicher Weise in dem Schiff vorgesehen sein und umgekehrt.

Ferner umfasst die Erfindung ein Verfahren mit mehreren Schritten. Ein, insbesondere erster, Schritt des Verfahrens umfasst ein Ermitteln einer Distanz mittels eines Erfassungssensors zwischen dem Erfassungssensor und einem Umgebungsobjekt. Ein weiterer Schritt, insbesondere ein zweiter Schritt, des Verfahrens umfasst ein Ermitteln einer Neigung des Schwimmkörpers mittels des Korrektursensors. Ein weiterer, insbesondere dritter, Schritt des Verfahrens umfasst das Bestimmen einer Distanz zwischen dem Schwimmkörper und dem Umgebungsobjekt mittels der ermittelten Distanz des Erfassungssensor zum Umgebungsobjekt unter Berücksichtigung der ermittelten Neigung des Korrektursensors. Insbesondere erfolgt nach dem ersten Schritt der zweite Schritt und/oder nach dem zweiten Schritt der dritte Schritt.

Ein Vorteil dieser Ausführungsform kann sein, dass eine Realdistanz mögliche Schwankungen des Schwimmkörpers kompensiert bzw. berücksichtigt und somit ein genauere Realdistanz basierend auf der ermittelten Primärdistanz bestimmt werden kann.

Bevorzugt umfasst das Verfahren in einem weiteren, insbesondere vierten, Schritt und/oder in einem der bereits beschriebenen Schritte, eine Realdistanz zwischen dem Schwimmkörper und dem Umgebungsobjekt basierend auf einer Vektorzerlegung der ermittelten Primärdistanz mittels des Erfassungssensors basierend auf der ermittelten Realneigung des Schwimmkörpers zu ermitteln. Insbesondere erfolgt der vierte Schritt nach oder in dem dritten Schritt. Ein Vorteil dieser Ausführungsform kann sein, dass eine aufwandsarme und akkurate Berücksichtigung der Realneigung durch die Vektorzerlegung erreicht werden kann.

Bevorzugt umfasst das Verfahren in einem weiteren, insbesondere fünften, Schritt das Bestimmen einer Annäherungsgeschwindigkeit und/oder eine Änderung der Annäherungsgeschwindigkeit. Insbesondere wird die Annäherungsgeschwindigkeit basierend auf mehreren zeitlich beabstandeten durch den Erfassungssensor ermittelten Distanzen (Primärdistanzen) und/oder Realdistanzen und/oder unter Ausnutzung des Dopplereffekts bestimmt. Ein Vorteil dieser Ausführungsform kann sein, dass durch die zusätzliche Information über die Annäherungsgeschwindigkeit ein Annäherungsvorgang zwischen dem Schwimmkörper und dem Umgebungsobjekt besser eingeschätzt und beherrscht werden kann.

Ferner umfasst die Erfindung insbesondere ein Computerprogramm, umfassend Befehle, die bei der Ausführung des Programms durch einen Computer oder durch Bestandteile des Systems, insbesondere der Steuereinheit, diesen/dieses veranlassen, das Verfahren und/oder die Schritte des Verfahrens wie vorhergehend und/oder nachfolgend beschrieben durchzuführen. Ferner kann die Erfindung auch ein computerlesbares Speichermedium/einen computerlesbaren Datenträger betreffen, wobei das computerlesbare Speichermedium / Datenträger Befehle umfasst, die bei der Ausführung durch einen Computer oder Bestandteile des Systems dieses/n veranlassen, das Verfahren/die Schritte des Verfahrens wie vorhergehend und/oder nachfolgend auszuführen.

Ferner umfasst die Erfindung ein Verfahren zur Herstellung eines Schiffes. Das Verfahren umfasst mehrere Schritte. Ein Schritt des Verfahrens umfasst ein Bereitstellen eines Schiffs. Ein Schritt umfasst ein Bereitstellen eines Erfassungssensors, insbesondere gemäß dem System nach einem der vorhergehenden Ausführungsformen. Ein weiterer Schritt des Verfahrens umfasst ein Bereitstellen eines Korrektursensors, insbesondere des Systems. Ein zusätzlicher Schritt umfasst ein Bereitstellen einer Steuereinheit, insbesondere des Systems. Ein weiterer Schritt des Verfahrens umfasst ein Anbringen des Erfassungssensors, des Korrektursensors und/oder der Steuereinheit an dem Schiff und ein Verbinden des Erfassungssensors und des Korrektursensors mit der Steuereinheit.

Ferner umfasst die Erfindung die Verwendung des Systems nach einer der vorgehenden Ausführungsformen, insbesondere zur relativen Positions- oder Distanzbestimmung eines Schwimmkörpers, insbesondere Schiffs, in Relation zu einem Umgebungsobjekt.

Ferner umfasst die Erfindung die Verwendung eines Schiffs nach einer der vorhergehenden und/oder nachfolgenden Ausführungsformen.

Ferner umfasst die Erfindung die Verwendung eines Erfassungssensors, eines Korrektursensors und/oder einer Steuereinheit in einem System oder Schiff nach einer der vorhergehenden und/oder nachfolgenden Ausführungsformen.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können auch in anderen Ausführungsformen eingesetzt werden, sofern dies nicht ausdrücklich ausgeschlossen wurde. Es zeigen:
- Figur 1: eine schematische Darstellung eines Systems nach einem ersten Ausführungsbeispiel der Erfindung,
- Figur 2: eine schematische Darstellung eines Schiffs mit dem System nach dem ersten Ausführungsbeispiel der Erfindung,
- Figur 3: eine schematische Darstellung eines Schiffs mit einem System nach einem zweiten Ausführungsbeispiel der Erfindung,
- Figur 4: eine schematische Darstellung eines Verfahrens zur Bestimmung einer Realdistanz nach einem Ausführungsbeispiel der Erfindung,
- Figur 5: eine schematische Darstellung einer Vektorrechnung nach einem Ausführungsbeispiel der Erfindung,
- Figur 6: eine schematische Darstellung eines Floating Docks mit einem System nach einem Ausführungsbeispiel der Erfindung,
- Figur 7: eine schematische Darstellung eines Verfahrens zur Herstellung eines Schwimmkörpers mit einem System nach einem der Ausführungsbeispiele der Erfindung, und
- Figur 8: eine schematische Darstellung eines Erfassungssensors nach einem Ausführungsbeispiel der Erfindung.

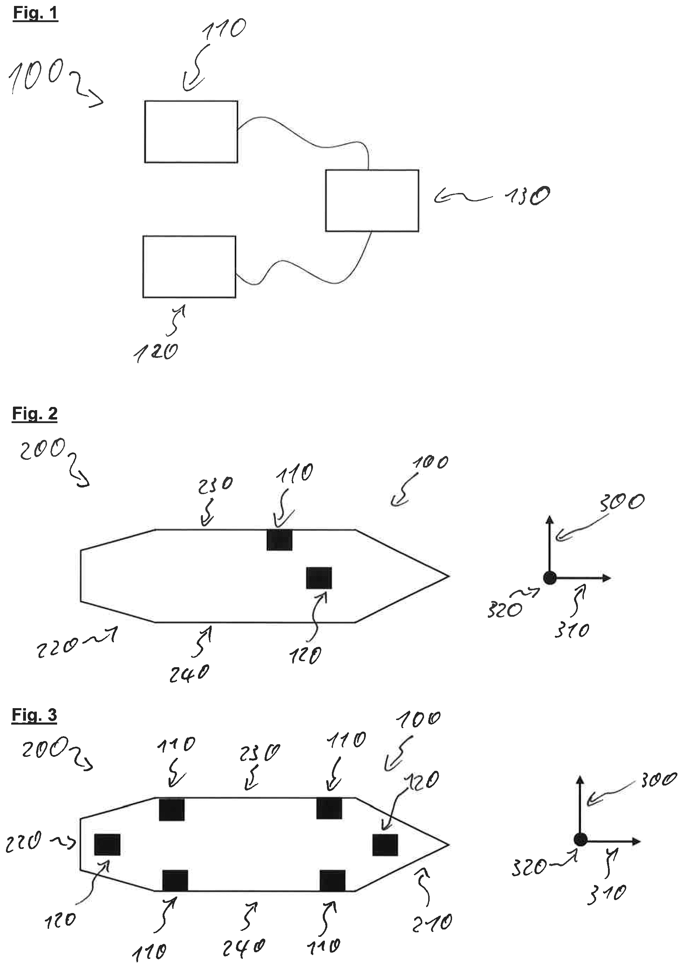

**Figur 1** zeigt eine schematische Darstellung eines Systems 100 nach einem ersten Ausführungsbeispiel der Erfindung. Das System 100 umfasst einen Erfassungssensor 110, einen Korrektursensor 120 und eine Steuereinheit 130. Der Erfassungssensor 110 und der Korrektursensor 120 sind an dem Schwimmkörper 200 anbringbar. Der Erfassungssensor 110 ist eingerichtet, eine Primärdistanz 420 des Erfassungssensor 110 zu einem Umgebungsobjekt 50, in einer Umgebung des Schwimmkörpers 200, zu ermitteln. Der Korrektursensor 120 ist eingerichtet, eine Realneigung des Korrektursensors 120 zu ermitteln. Die Steuereinheit 130 ist mit dem Erfassungssensor 110 und dem Korrektursensor 120 zum Signalaustausch, mittels eines Kabels, verbunden. Die Steuereinheit 130 ist eingerichtet, eine Realdistanz 460 des Schwimmkörpers 200 zu dem Umgebungsobjekt 50 mittels der ermittelten Primärdistanz des Erfassungssensors 110 zum Umgebungsobjekt 50 unter Berücksichtigung der ermittelten Realneigung des Korrektursensors 120 zu bestimmen.

Der Korrektursensor 120 ist eingerichtet, die Realneigung relativ zu einer ersten Achse, und zu einer der ersten Achse orthogonal angeordneten zweiten Achse und zu einer zu der ersten Achse und der zweiten Achse orthogonal angeordneten dritten Achse zu ermitteln. Der Korrektursensor 120 ist als inertiale Messeinheit ausgestaltet. Der Korrektursensor 120 ist fest an einer Struktur des Schwimmkörpers 200 befestigbar.

Der Erfassungssensor 110 ist fest an einer Struktur des Schwimmkörpers 200 befestigbar. Der Erfassungssensor 110 und der Korrektursensor 120 sind mittels Schraubverbindungen mit dem Schwimmkörper 200 befestigbar. Der Erfassungssensor 110 ist als frequenzmoduliertes Dauerstrichradar und/oder als FMCW-Radar ausgestaltet. Der Erfassungssensor 110 ist eingerichtet, eine Distanz in einem Erfassungsbereich von 10 cm bis zumindest 50 m, bevorzugt zumindest 80 m, von dem Erfassungssensor 110 zu ermitteln. Der Erfassungssensor 110 ist eingerichtet, in einem Frequenzband von 76 bis 81 GHz zu arbeiten. Vorteilhafterweise ist der Erfassungssensor 110 eingerichtet die Primärdistanz 420 zu einem Umgebungsobjekt 50 in einem Messbereich Erfassungsbereich zu ermitteln.

Die Steuereinheit 130 ist eingerichtet, bei der Bestimmung der Realdistanz 460 des Schwimmkörpers 200 zu dem Umgebungsobjekt 50 den Trimmwinkel und/oder den Rollwinkel des Schwimmkörpers 200 zu berücksichtigen, welche(r) durch den Korrektursensor 120, als Neigung bzw. Realneigung bezeichnet, erfasst werden. Die Steuereinheit 130 ist eingerichtet, die Realdistanz 460 zwischen dem Schwimmkörper 200 und dem Umgebungsobjekt 50 mittels einer Vektorzerlegung der ermittelten Primärdistanz 420 des Erfassungssensors 110 zum Umgebungsobjekt 50 unter Verwendung der ermittelten Realneigung des Korrektursensors 120 zu bestimmen. Die Steuereinheit 130 ist eingerichtet, eine Annäherungsgeschwindigkeit zwischen dem Schwimmkörper 200 und einem Umgebungsobjekt 50 mittels der ermittelten Realdistanz 460 und dessen zeitlicher Ableitung zu bestimmen.

**Figur 2** zeigt eine schematische Darstellung eines Schiffs 200 mit dem System 100, insbesondere nach dem ersten Ausführungsbeispiel der Erfindung. Das Schiff 200 weist eine Längsachse 310, eine Querachse 300 und eine Hochachse 320 auf. Die Längsachse 310 ist parallel zu einer Haupterstreckungsrichtung des Schiffs 200. Die Querachse 300 ist orthogonal zur Längsachse 310 ausgerichtet. Die Längsachse 310 und die Querachse 300 bilden eine Ebene parallel zur Wasserlinie. Die Hochachse 320 ist orthogonal zu Längsachse 310 und zur Querachse 300 ausgerichtet.

Der Korrektursensor 120 des Systems 100 ist eingerichtet, eine Neigung bzw. Realneigung relativ zu der Längsachse 310 des Schiffs 200 (Rollwinkel) und eine Neigung relativ zu der Querachse 300 des Schiffs 200 (Trimmwinkel und/oder Stampfwinkel) zu ermitteln. Die Steuereinheit 130 ist eingerichtet, mittels der ermittelten Realneigung des Korrektursensors 120 einen Rollwinkel und einen Trimmwinkel des Schiffs 200 zu ermitteln. Der Rollwinkel entspricht einer Neigung um die Längsachse 310 des Schiffs 200. Der Trimmwinkel bzw. der Stampfwinkel entspricht einer Neigung um die Querachse 300 des Schiffs 200.

Der Erfassungssensor 110 und der Korrektursensor 120 sind fest an einer Struktur des Schiffs 200 befestigt. Der Erfassungssensor 110 ist so an dem Schiff 200 befestigt, dass wenn sich das Schiff 200 im Wasser befindet, der Erfassungssensor 110 sich mehr als zwei Meter über der Wasserlinie des Schiffes 200 befindet. Der Erfassungssensor 110 ist bis zu 15° relativ zur Querachse 300 nach unten hin zur Wasserlinie des Schiffs 200 und/oder der Ebene aus der Längsachse 310 des Schiffs 200 und der Querachse 300 des Schiffs 200 geneigt. Der Korrektursensor 120 ist in einem Bereich von 1/3 bis 2/3 der Schiffslänge entlang der Längsachse 310 des Schiffs 200 angeordnet.

**Figur 3** zeigt eine schematische Darstellung eines Schiffs 200 mit einem System 100, insbesondere nach einem zweiten Ausführungsbeispiel der Erfindung. Die zweite Ausführungsform weist ähnliche Merkmale wie das erste Ausführungsbeispiel auf. Das System 100 weist mehrere Erfassungssensoren 110 auf. Alle Erfassungssensoren 110 sind an dem Schiff 200 angebracht. Alle Erfassungssensoren 110 sind eingerichtet, eine Primärdistanz 420 der Erfassungssensoren 110 zu jeweils einem oder einer Vielzahl von Umgebungsobjekt(en) 50 in der Umgebung des Schiffs 200 zu ermitteln. Die Steuereinheit 130 ist zum Signalaustausch mit allen Erfassungssensoren 110 verbunden. Die Steuereinheit 130 ist eingerichtet, die Realdistanz 420 des Schiffs 200 zu dem oder einem der Umgebungsobjekt(e) 50 mittels der ermittelten Primärdistanzen 420 aller Erfassungssensoren 110 zu dem Umgebungsobjekt 50 oder eines Umgebungsobjekts 50 unter Berücksichtigung der ermittelten Realneigung durch die Korrektursensoren 120 zu bestimmten.

Das System 100 weist mehrere Korrektursensoren 120 auf. Alle Korrektursensoren 120 sind an dem Schiff 200 angebracht. Alle Korrektursensoren 120 sind eingerichtet, eine Realneigung des jeweiligen Korrektursensors 120 zu ermitteln. Die Steuereinheit 130 ist zum Signalaustausch mit allen Korrektursensoren 120 verbunden. Die Steuereinheit 130 ist eingerichtet, die Realdistanz 460 des Schiffs 200 zu dem oder einem Umgebungsobjekt 50 mittels der ermittelten Primärdistanz 420 eines jeweiligen Erfassungssensors 110 zum Umgebungsobjekt 50 unter Berücksichtigung der ermittelten Realneigungen zu bestimmten.

Alle Erfassungssensoren 110 sind an unterschiedlichen Positionen am Schiff 200 angeordnet. Das Schiff 200 weist eine erste Seite 230 und einer der ersten Seite 230 gegenüberliegende zweiten Seite 240 auf. An der ersten Seite 230 und an der zweiten Seite 240 sind jeweils mehrere Erfassungssensoren 110 angeordnet. Einer der Korrektursensoren 120 ist im Bereich des Bugs 210 des Schiffs 200 angeordnet. Ein weiterer Korrektursensor 120 ist im Bereich des Hecks 220 des Schiffs 200 angeordnet.

Einer der mehreren Erfassungssensoren 110 ist näher als 12 % einer Schiffslänge des Schiffs 200 vom Bug 210 des Schiffs 200 entfernt angeordnet. Einer der mehreren Erfassungssensoren 110 ist näher als 12 % einer Schiffslänge des Schiff 200 vom Heck 220 des Schiffs 200 entfernt angeordnet. Die mehreren Erfassungssensoren 110 sind so am Schiff 200 angeordnet, dass sich die Messbereiche von allen Erfassungssensoren 110 mit zumindest einem Messbereich eines anderen Erfassungssensors 110 überlappen.

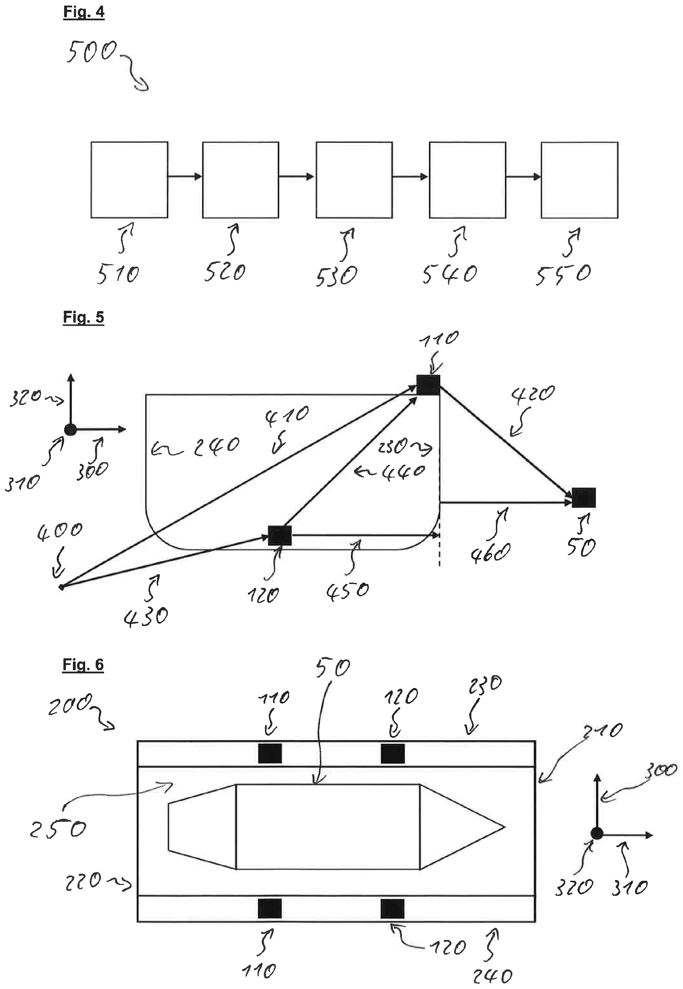

**Figur 4** zeigt eine schematische Darstellung eines Verfahrens 500 zur Bestimmung einer Realdistanz 460 nach einem Ausführungsbeispiel der Erfindung. Ein erster Schritt 510 des Verfahrens 500 umfasst ein Ermitteln einer Primärdistanz 420 zwischen dem Erfassungssensor 110 und einem Umgebungsobjekt 50 mittels dem Erfassungssensors 110. Ein zweiter Schritt 520 des Verfahrens 500 umfasst ein Ermitteln einer Neigung des Schiffs 200 mittels des Korrektursensors 120. Ein dritter Schritt 530 des Verfahrens 500 umfasst das Bestimmen einer Realdistanz 460 zwischen dem Schiff 200 und dem Umgebungsobjekt 50 mittels der ermittelten Primärdistanz 420 des Erfassungssensor 110 zum Umgebungsobjekt 50 unter Berücksichtigung der ermittelten Neigung des Korrektursensors 120. Nach dem ersten Schritt 510 erfolgt der zweite Schritt 520 und nach dem zweiten Schritt 520 erfolgt der dritte Schritt 530.

Das Verfahren 500 umfasst einen weiteren, vierten Schritt 540, der jedoch bereits auch ein Teil des dritten Schritts sein kann. In diesem Schritt 540 wird eine horizontale Distanz zwischen dem Schwimmkörper und dem Umgebungsobjekt 50 basierend auf einer Vektorzerlegung der ermittelten Distanz mittels des Erfassungssensors 110 basierend auf der ermittelten Neigung des Schiffs 200 ermittelt. Der vierte Schritt 540 erfolgt insbesondere in dem dritten Schritt 530. Das Verfahren 500 weist in einem weiteren, insbesondere fünften, Schritt 550 das Bestimmen einer Annäherungsgeschwindigkeit auf. Der fünfte Schritt 550 erfolgt nach dem vierten Schritt 540.

**Figur 5** zeigt eine schematische Darstellung einer Vektorzerlegung nach einem Ausführungsbeispiel der Erfindung. Die Vektoren beziehen sich auf einen Ursprung eines globalen Koordinatensystems 400, welcher grundlegend frei gewählt werden kann. Bevorzugt liegt der Ursprung jedoch im Schwerpunkt des Schiffs. Bei dem Koordinatensystem handelt es sich um ein festes, also unbewegtes, Koordinatensystem.

Bei der Vektorzerlegung wird die Position des Erfassungssensors 110 in dem globalen Koordinatensystem als ein erster Vektor 410 angesehen. Die Primärdistanz wird als ein zweiter Vektor 420 zwischen der Position des Erfassungssensors 110 und der Position des Umgebungsobjekts 50 angesehen. Die Position des Korrektursensors 120 wird als ein dritter Vektor 430 angesehen. Der Abstand zwischen der Position des Korrektursensors 120 und der Position des Erfassungssensors 110 wird als ein vierter Vektor 440 angesehen. Der Abstand einer Struktur des Schiffs 200 zu dem Korrektursensor 120 parallel zur Querachse 300 des Schiffs wird als ein fünfter Vektor 450 angesehen. Die bestimmte Realdistanz zwischen der Struktur des Schiffs 200 und dem Umgebungsobjekt 50 wird als ein sechster Vektor 460 parallel zu einer Querachse 300 des Schwimmkörpers angesehen.

Der dritte Vektor 430 ist eine bekannte Größe, der vierte Vektor 440 ist eine bekannte Größe und der fünfte Vektor 450 ist eine bekannte Größe. Der zweite Vektor 420 wird durch den Erfassungssensor 110 ermittelt. Die bekannten Größen sind in der Steuereinheit 130 hinterlegt. Die Steuereinheit 130 ist eingerichtet, den fünften Vektor 450 mittels des vierten Vektors 440 und der ermittelten Realneigung zu bestimmen. Die Steuereinheit 130 ist eingerichtet, den sechsten Vektor 460 mittels des zweiten Vektors 420 und des vierten Vektor 440 und des fünften Vektor 450 zu bestimmen.

**Figur 6** zeigt eine schematische Darstellung eines Floating Docks 200 mit dem System 100 nach einem Ausführungsbeispiel der Erfindung. Das Floating Dock 200 ist in diesem Ausführungsbeispiel der Schwimmkörper. Ferner ist in dem Floating Dock 200 ein Schiff 50 angeordnet. Das Schiff 50 ist in diesem Ausführungsbeispiel das Umgebungsobjekt 50. Dieses Ausführungsbeispiel weist ähnliche Merkmale wie die vorherigen Ausführungsbeispiele auf. Die Erfassungssensoren 110 und die Korrektursensoren 120 sind an dem Floating Dock 200 angeordnet. Das Floating Dock 200 weist einen Innenbereich 250 auf, in welchem das/ein Schiff 50 angeordnet werden kann. Auf der ersten Seite 230 des Floating Docks 200 ist ein Erfassungssensors 110 und ein Korrektursensor 120 angeordnet. Auf der zweiten Seite 240 des Floating Docks 200 sind ein weiterer Erfassungssensors 110 und ein weiterer Korrektursensor 120 angeordnet.

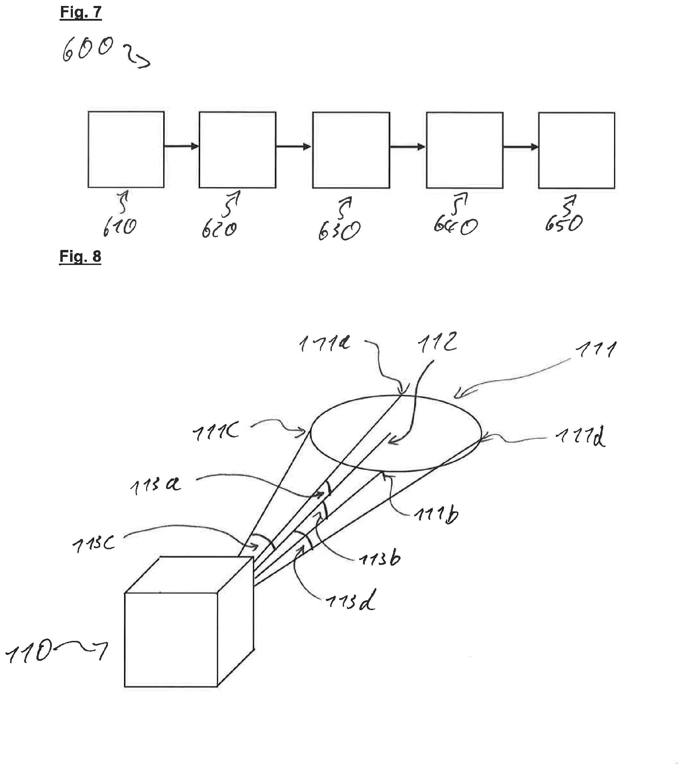

**Figur 7** zeigt eine schematische Darstellung eines Verfahrens 600 zur Herstellung eines Schiffs 200 mit einem System 100 nach einem der Ausführungsbeispiele der Erfindung. Das Verfahren 600 umfasst mehrere Schritte. Ein Schritt 610 des Verfahrens umfasst ein Bereitstellen eines Erfassungssensors 110. Ein weiterer Schritt 620 des Verfahrens umfasst ein Bereitstellen eines Korrektursensors 120. Ein weiterer Schritt 630 umfasst ein Bereitstellen einer Steuereinheit 130. Ein anderer Schritt 640 des Verfahrens 600 umfasst ein Anbringen des Erfassungssensors 110 und des Korrektursensors 120 an dem Schiff 200. Ein zusätzlicher Schritt 650 des Verfahrens 600 weist ein Verbinden des Erfassungssensors 110 und des Korrektursensors 120 mit der Steuereinheit 130 auf. Die Reihenfolge der Schritte kann im Rahmen der Erfindung grundlegend frei gewählt werden, sodass das hier dargelegte Verfahren zur Herstellung nicht auf die - wenn auch bevorzugte - dargelegte Reihenfolge beschränkt ist.

**Figur 8** zeigt eine schematische Ansicht eines Erfassungssensors (110) nach einem Ausführungsbeispiel der Erfindung.

Der Erfassungssensor 110 sendet zur Erfassung der Umgebung Erfassungsstrahlen aus. Hierbei decken die Erfassungsstrahlen den Messbereich 111 ab. Eine Gerade durch das Zentrum des Erfassungssensors 110 und dem Zentrum des Messbereichs 111 ist die Haupterfassungsrichtung 112. Insbesondere weist der Messbereich 111 in einer Schnittebene senkrecht zur Haupterfassungsrichtung 112 einen geschlossenen Umfang auf, welcher als Messbereichskontur bezeichnet werden kann.

Die Messbereichskontur ist in dem dargestellten Beispiel eine Ellipse. Die Messbereichskontur weist einen ersten vertikalen Endpunkt 111a und einen zweiten vertikalen Endpunkt 111b auf. Der erste vertikale Endpunkt 111a und der zweite vertikale Endpunkt 111b liegen auf der Messbereichskontur in vertikaler Richtung auf einer Linie gegenüber. Eine Verbindungslinie zwischen dem Zentrum des Erfassungssensor 110 und den vertikalen Endpunkt 111a oder 111b weist jeweils einen Sekundärstreuwinkel 113a, 113b zur Haupterfassungsrichtung 112 auf.

Die Messbereichskontur weist einen ersten horizontalen Endpunkt 111c und einen zweiten horizontalen Endpunkt 111d auf. Der erste horizontalen Endpunkt 111c und der zweite horizontalen Endpunkt 111d liegen auf der Messbereichskontur in horizontaler Richtung auf einer Linie gegenüber. Eine Verbindungslinie zwischen dem Zentrum des Erfassungssensor 110 und den jeweiligen horizontalen Endpunkten 111c oder 111d weist einen Hauptstreuwinkel 113c, 113d zur Haupterfassungsrichtung 112 auf.

### Bezugszeichenliste:

- 50: Umgebungsobjekt
- 100: System
- 110: Erfassungssensor
- 111: Messbereich
- 111a: erster vertikaler Endpunkt
- 111b: zweiter vertikaler Endpunkt
- 111c: erster horizontaler Endpunkt
- 111d: zweiter horizontaler Endpunkt
- 112: Haupterfassungsrichtung
- 113a: Sekundärstreuwinkel
- 113b: Sekundärstreuwinkel
- 113c: Hauptstreuwinkel
- 113d: Hauptstreuwinkel
- 120: Korrektursensor
- 130: Steuereinheit
- 200: Schwimmkörper, Schiff, Dock
- 210: Bug
- 220: Heck
- 230: erste Seite
- 240: zweite Seite
- 250: Innenbereich
- 300: Querachse des Schiffes
- 310: Längsachse des Schiffes
- 320: Hochachse des Schiffes
- 400: Ursprung des globalen Koordinatensystems
- 410: erster Vektor
- 420: zweiter Vektor, Primärdistanz
- 430: dritter Vektor
- 440: vierter Vektor
- 450: fünfter Vektor
- 460: sechster Vektor, Realdistanz
- 500: Verfahren zur Positions- und Bewegungserkennung von Schwimmkörpern
- 510: erster Schritt
- 520: zweiter Schritt
- 530: dritter Schritt
- 540: vierter Schritt
- 550: fünfter Schritt
- 600: Verfahren zur Herstellung des Schiffs
- 610: sechster Schritt
- 620: siebter Schritt
- 630: achter Schritt
- 640: neunter Schritt
- 650: zehnter Schritt

## Patentansprüche

1. System (100), insbesondere zur Positionsbestimmung- und/oder zur Bewegungserkennung und/oder Distanzbestimmung eines Schwimmkörpers (200), aufweisend:
- einen Erfassungssensor (110),
- einen Korrektursensor (120), und
- eine Steuereinheit (130),
- wobei der Erfassungssensor (110) und/oder der Korrektursensor (120) an dem Schwimmkörper (200) anbringbar ist,
- wobei der Erfassungssensor (110) eingerichtet ist, eine Primärdistanz (420) des Erfassungssensor (110) zu einem Umgebungsobjekt (50), insbesondere in einer Umgebung des Schwimmkörpers (200), zu ermitteln,
- wobei der Korrektursensor (120) eingerichtet ist, eine Realneigung des Korrektursensors (120) zu ermitteln,
- wobei die Steuereinheit (130) mit dem Erfassungssensor (110) und/oder dem Korrektursensor (120) zum Signalaustausch, insbesondere kabellos und/oder kabelgebunden, verbunden ist, und
- wobei die Steuereinheit (130) eingerichtet ist, eine Realdistanz (460) des Schwimmkörpers (200) zu dem Umgebungsobjekt (50) mittels der ermittelten Primärdistanz (420) des Erfassungssensors (110) zum Umgebungsobjekt (50) unter Berücksichtigung der ermittelten Realneigung des Korrektursensors (120) zu bestimmen.

2. System (100) nach Anspruch 1,
wobei der Schwimmkörper (200) eine Längsachse (310), eine Querachse (300) und eine Hochachse (320) aufweist,
wobei die Längsachse (310) parallel zu einer Haupterstreckungsrichtung des Schwimmkörpers (200) orientiert ist,
wobei die Querachse (300) orthogonal zur Längsachse (310) ausgerichtet ist, wobei die Längsachse (310) und die Querachse (300) eine Ebene parallel zur Wasserlinie bilden,
wobei die Hochachse (320) orthogonal zu Längsachse (310) und zur Querachse (300) ausgerichtet ist, und
wobei die Realneigung eine Neigung um die Längsachse (310), eines mit dem Schwimmkörper (200) mitbewegten Koordinatensystems zu einem erdfesten Koordinatensystem, ist.

3. System (100) nach einem der vorhergehenden Ansprüche,
wobei der Erfassungssensor (110) als Radar, insbesondere als frequenzmoduliertes Radar und/oder als Dauerstrichradar, ausgestaltet ist.

4. System (100) nach einem der vorhergehenden Ansprüche,
wobei der Erfassungssensor (110) eingerichtet ist, eine Primärdistanz (420) in einem Erfassungsbereich von 10 cm bis 80 m zu ermitteln.

5. System (100) nach einem der vorhergehenden Ansprüche,
wobei der Korrektursensor (120) eingerichtet ist, die Realneigung mittels einer Winkelmessung relativ zu einem Lot zu ermitteln,
wobei das Lot entlang des Erdschwerefelds ausgerichtet ist, und
wobei die Neigung des Korrektursensors (120) einem Winkel zwischen der aktuellen Lage des Korrektursensors (120) zu dem Lot entspricht.

6. System (100) nach einem der vorgehenden Ansprüche,
wobei der Korrektursensor (120) als inertiale Messeinheit ausgestaltet ist.

7. System (100) nach einem der vorhergehenden Ansprüche, insbesondere nach einem der Ansprüche 3 bis 6,
wobei der Erfassungssensor (110) eingerichtet ist, in einem Frequenzband von 76 bis 81 GHz, insbesondere in einem Frequenzband von 77 bis 81 GHz zu arbeiten.

8. System (100) nach einem der vorhergehenden Ansprüche,
wobei die Steuereinheit (130) eingerichtet ist, die Realdistanz (460) zwischen dem Schwimmkörper (200) und dem Umgebungsobjekt (50) mittels einer Vektorzerlegung der ermittelten Primärdistanz (420) des Erfassungssensors (110) zum Umgebungsobjekt (50) und der ermittelten Realneigung des Korrektursensors (120) zu bestimmen.

9. System (100) nach einem der vorhergehen Ansprüche,
wobei der Korrektursensor (120) eingerichtet ist, zumindest die Realneigung um die Längsachse (310) und/oder um die Querachse (300) des Schwimmkörpers (200) zu bestimmen.

10. System (100) nach einem der vorhergehenden Ansprüche,
wobei die Steuereinheit (130) eingerichtet ist, eine Annäherungsgeschwindigkeit, insbesondere eine Änderung der Annäherungsgeschwindigkeit, zwischen dem Schwimmkörper (200) und dem Umgebungsobjekt (50) mittels der ermittelten Realdistanz (460) des Erfassungssensors (110), insbesondere der mehreren Erfassungssensoren (110), zu bestimmen.

11. Schiff (200) aufweisend ein System (100) nach einem der vorhergehenden Ansprüche 1 bis 10.

12. Schiff (200) nach Anspruch 11,
wobei ein Erfassungssensor (110) des Systems (100) so an dem Schiff (200) befestigt ist, dass wenn sich das Schiff (200) im Wasser befindet, der Erfassungssensor (110) sich mehr als zwei Meter über der Wasserlinie des Schiffs (200) befindet.

13. Verfahren (500) zur Positions- und Bewegungserkennung von Schwimmkörpern (200) aufweisend ein System (100) nach einem der Ansprüche 1 bis 10, umfassend die nachfolgenden Schritte:
- Ermitteln (510) einer Primärdistanz (420) mittels eines Erfassungssensor (110) gemäß des System (100) nach einem der Ansprüche 1 bis 10 zwischen dem Erfassungssensor (110) und einem Umgebungsobjekt (50) in der Umgebung des Schwimmkörpers (200),
- Ermitteln (520) einer Realneigung des Schwimmkörpers (200) mittels des Korrektursensors (120) des Systems (100), und
- Bestimmen (530) einer Realdistanz (460) zwischen dem Schwimmkörper (200) und dem Umgebungsobjekt (50) mittels der ermittelten Primärdistanz (420) des Erfassungssensors (110) zum Umgebungsobjekt (50) unter Berücksichtigung der ermittelten Realneigung des Korrektursensors (120).

14. Verfahren (600) zur Herstellung eines Schiffs (200) nach einem der vorhergehenden Ansprüche 11 bis 12, aufweisend die nachfolgenden Schritte:
- Bereitstellen (610) eines Schiffs (200),
- Bereitstellen (620) eines Erfassungssensors (110),
- Bereitstellen (630) eines Korrektursensors (120),
- Bereitstellen (640) einer Steuereinheit (130), und
- Anbringen (650) des Erfassungssensors (110), des Korrektursensors (120) und der Steuereinheit (130) an dem Schiff (200) und verbinden der Steuereinheit (130) mit dem Erfassungssensor (110) und dem Korrektursensor (120).

15. Verwendung eines Systems (100) nach einem der vorhergehenden Ansprüche 1 bis 10 und/oder Verwendung eines Schiffs (200) nach einem der vorhergehen Ansprüche 11 bis 12.
